(19) **Europäisches Patentamt / European Patent Office / Office européen des brevets**

(11) **EP 0 947 860 B1**

(12) **EUROPEAN PATENT SPECIFICATION**

(45) Date of publication and mention
of the grant of the patent:
**14.05.2008 Bulletin 2008/20**

(51) Int Cl.:
*G02B 6/126* (2006.01)     *G02B 6/124* (2006.01)

(21) Application number: **99105898.3**

(22) Date of filing: **24.03.1999**

(54) **Optical grating-based device having a slab waveguide polarization compensating region**

Mit einem Gitter versehene optische Vorrichtung mit einem Schichtwellenleiterbereich zur Polarisationskompensation

Dispositif optique avec un réseau, le dispositif ayant une zone d'un guide d'ondes planaire pour compenser la polarisation

(84) Designated Contracting States:
**DE FR GB SE**

(30) Priority: **31.03.1998 CA 2233849**

(43) Date of publication of application:
**06.10.1999 Bulletin 1999/40**

(73) Proprietor: **NATIONAL RESEARCH COUNCIL OF CANADA**
**Ottawa, Ontario K1A OR6 (CA)**

(72) Inventors:
• **He, Jian-Jun**
**Ottawa,**
**Ontario CA K1R 7P7 (CA)**
• **Koteles, Emil S.**
**Ottawa,**
**Ontario,**
**CA K1Y OB2 (CA)**
• **Erickson, L.**
**Cumberland,**
**Ontario,**
**CA K4C 1K9 (CA)**
• **Lamontagne B.**
**Ottawa,**
**Ontario CA K1N 7Z7 (CA)**
• **Delage, A.**
**Ottawa,**
**Ontario CA K1J 8M8 (CA)**

(74) Representative: **Frei, Alexandra Sarah**
**Frei Patentanwaltsbüro**
**Postfach 1771**
**8032 Zürich (CH)**

(56) References cited:
**US-A- 5 623 571**

• **HE J-J ET AL: "INTEGRATED POLARIZATION COMPENSATOR FOR WDM WAVEGUIDE DEMULTIPLEXERS" IEEE PHOTONICS TECHNOLOGY LETTERS, IEEE INC. NEW YORK, US, vol. 11, no. 2, February 1999 (1999-02), pages 224-226, XP000803432 ISSN: 1041-1135**
• **HIROSHI TAKAHASHI ET AL: "POLARIZATION-INSENSITIVE ARRAYED-WAVEGUIDE WAVELENGTH MULTIPLEXER WITH BIREFRINGENCE COMPENSATING FILM" IEEE PHOTONICS TECHNOLOGY LETTERS, IEEE INC. NEW YORK, US, vol. 5, no. 6, 1 June 1993 (1993-06-01), pages 707-709, XP000384062 ISSN: 1041-1135**
• **SMIT M K ET AL: "PHASAR-BASED WDM-DEVICES: PRINCIPLES, DESIGN AND APPLICATIONS" IEEE JOURNAL OF SELECTED TOPICS IN QUANTUM ELECTRONICS, IEEE SERVICE CENTER, US, vol. 2, no. 2, 1 June 1996 (1996-06-01), pages 236-250, XP000685236 ISSN: 1077-260X**

EP 0 947 860 B1

## Description

### Field of the Invention

This invention relates generally to an integrated polarization compensated optical waveguide grating device, and more particularly to a wavelength multi/demultiplexer exhibiting little or no polarization sensitivity, or alternatively to an optical device that has a controlled amount of polarization sensitivity.

### Background of the Invention

Integrated wavelength multi/demultiplexers are important components for wavelength division multiplexing (WDM) optical communication systems. Integration offers the advantages of compactness, reliability, and reduced packaging costs. Further, implementation in a semiconductor material, particularly the InGaAsP/InP system important for optical fiber communications systems, would permit monolithic integration of these passive devices with active ones, such as lasers, modulators, optical switches, and detectors, resulting in sophisticated wavelength sensitive photonic integrated circuits with complex functionalities.

Heretofore, one of the major drawbacks in an integrated wavelength multi/demultiplexer is the polarization sensitivity of the device. Since an optical signal propagating through an optical fiber has an indeterminate polarization state, the switching/routing devices must be substantially polarization insensitive. However, planar waveguides usually have different propagation constants for TE (transverse electric) and TM (transverse magnetic) waveguide modes. For wavelength multi/demultiplexers, this difference in propagation constants results in a wavelength shift in the spectral response peak or the passband of each wavelength channel. This wavelength shift is sensitive to the design of the planar waveguide, and can be as large as 3 nm. As WDM systems are being designed towards smaller and smaller channel spacing (from 1.6nm to 0.8 nm or even less in the future), even a small polarization dependent wavelength shift (e.g. 0.3~0.4 nm) is of concern.

Two types of integrated wavelength multi/demultiplexers that have been widely investigated are phased waveguide arrays and grating-on-a-chip spectrometers.

Grating based devices require high quality, deeply etched grating facets. The optical loss of the device depends critically on the verticality and smoothness of the grating facets. However, the size of the grating device is usually much smaller than the phased array and the spectral finesse is much higher due to the fact that the number of teeth in the grating is much larger than the number of waveguides in the phased array. This allows the grating based device to have a larger number of channels available over its free spectral range (FSR) and consequently can be scaled-up easily to high density operation.

In waveguide array based devices, several approaches have been used to compensate for the undersized polarization sensitivity, for example the insertion of a half wave plate in the middle of the waveguides array is described by H. Takahashi, Y. Hibino, and I. Nishi, in a paper entitled "Polarization-insensitive arrayed waveguide grating wavelength multiplexer on silicon", Opt. Lett., vol. 17, no. 7, pp. 499-501, 1992.

Alternatively, the use of non-birefringent waveguides with a square cross section has been described by J. B. D. Soole, M. R. Amersfoort, H. P. Leblanc, N. C. Andreadakis, A. Raijhel, C. Caneau, M. A. Koza, R. Bhat, C. Youtsey, and I. Adesida, in a paper entitled "Polarization-independent InP arrayed waveguide filter using square cross-section waveguides", Electron. Lett., vol. 32, pp. 323-324, 1996.

Birefringence compensation using two different rib waveguides has been described by P. C. Chou, C. H. Joynerm M. Zirngibl, in U. S. patent 5,623,571 entitled "Polarization compensated waveguide grating router". In the '571 patent the polarization compensation is not within the slab waveguiding region. This technique requires either two regrowth steps as described in the patent and in a paper by the same authors entitled "Polarization compensated waveguide grating router on InP", Electron. Lett., vol. 31, pp. 1662-1664, 1995, or two etching steps as described by C. G. M. Vreeburg, C. G. P. Herben, X. J. M Leijtens, M K Smit, F. H. Groen, J. J. G. M. van der Tol and P. Demeester, in a paper entitled "An improved technology for eliminating polarization dispersion in integrated phasar demultiplexers", in Proc. 23rd Conf. on Optical Comm. (ECOC'97), pp. 3.83-3.86, Edinburgh, UK, 1997. In addition to increased complexity in fabrication process, the reduced cladding layer thickness in the polarization compensating rib/ridge waveguides resulted in a reduced lateral index contrast, and consequently increased phase errors due to enhanced coupling between adjacent waveguides. In order to avoid radiation loss due to reduced index contrast, the polarization compensating waveguides need to be implemented in straight waveguide section, which leads to an additional straight section length of the arrayed waveguides and consequently a larger device size.

Yet another alternative in the attempt to overcome polarization sensitivity is dispersion matching with adjacent diffraction orders which has been described by M Zirngibl, C. H. Joyner, L. W. Stulz, Th. Craigge and C. Dragone, in a paper entitled "Polarization independent 8x8 waveguide grating multiplexer on InP", Electron. Lett., vol. 29, pp. 201-201, 1993, and by L. H. Spiekman, M R Amersfoort, A. H. de Vreede, F. P. G. M. van Ham, A. Kuntze, J. W. Pedersen, P.

Demeester, and M. K. Smit, in a paper entitled "Design and realization of polarization independent phased array wavelength demultiplexers using different array order for TE and TM", J. Lightwave Technol., vol. 14, pp. 991-995, 1996.

Another approach is that of using layer structures with low birefringence by using thick guiding layer and low refractive index contrasts has been described by H. Bissessur, F. Gaborit, B. Martin, P. Pagnod-Rossiaux, J. L. Peyre and M. Renaud, in a paper entitled "16 channel phased array wavelength demultiplexer on InP with low polarization sensitivity", Electron. Lett., vol. 30, pp. 336-337, 1994.

For diffraction grating based wavelength multi/demultiplexers, only the last two approaches are possible. In the polarization compensation method which attempts to match the TE and TM passband to two adjacent diffraction orders, the free spectral range (FSR) of the grating needs to be chosen equal to the wavelength split between the two modes. In this case, the passband corresponding to the $m$th-order for TE will overlap with the $(m-1)$th order for TM A severe drawback of this method is that the available FSR for WDM channels is limited by the polarization split, which is determined by the waveguide layer structure. It is usually limited to a few nanometers. A large polarization split is preferable in this case. In addition, since the polarization dispersion is very sensitive to the exact layer composition and thickness, it is difficult to obtain a good match due to the non-uniformity and non-reproducibility of wafer growths.

Another method for achieving polarization insensitive operation in diffraction grating based wavelength multi/demultiplexer is to use a birefringence-reduced layer structure, combined with an input/output waveguide design for a flattened channel response. Polarization dispersion as small as 0.3~0.4nm has been obtained with InGaAsP/InP double heterostructures as is described by J.-J. He, B. Lamontagne, A Delage, L. Erickson, M. Davies, and E. S. Koteles, in a paper entitled "Monolithic integrated wavelength demultiplexer based on a waveguide Rowland circle grating in In-GaAsP/InP", J. Lightwave Tech, vol. 16, pp.631-638, 1998. Lower birefringence waveguides can be designed by using a thick guiding layer and low retractive index contrast between the guiding and cladding layers. However, low index contrast InGaAsP/InP layers are very difficult to grow in practice. One way to obtain low index contrast waveguides is to use homogenous InP with different doping levels for the guiding and cladding layers, as suggested by E. Gini, W. Hunziker, and H. Melchior, in a paper entitled "Polarization independent WDM multiplexer/demultiplexer module", J. Lightwave Tech, vol. 16, pp.625-630, 1998. Although a polarization dispersion as small as 0.1 nm was obtained, the layer structure design poses severe limitations on what kind of devices can be integrated. Moreover, the thick guiding layer results in a much more stringent requirement on the verticality of the grating facet in order to keep reflection loss low.

It is an object of the invention to provide a compact, diffraction grating or phased array based optical multiplexer/demultiplexer that is substantially polarization insensitive and which overcomes many of the limitations of prior art devices.

## Summary of the Invention

In accordance with the invention, there is provided, a method of compensating for birefringence normally associated with the propagation of light in a planar waveguide grating device having a slab waveguiding region having a first birefringence, comprising the steps of: providing within the slab waveguiding region a second region having a predetermined shape and predetermined dimensions, the second region having a second different birefringence than the first birefringence for providing polarization compensation of the device.

In accordance with the invention there is provided an integrated at least substantially polarization compensated optical waveguide grating device as defined in claim 5.

This invention provides a convenient method of compensating the polarization dispersion in grating based wavelength demultiplexers by incorporating a specially shaped area with modified index, however the incorporation of this specially shaped area does not alter the size of the grating based multi/demultiplexer. Advantageously, its implementation in the fabrication process uses a standard shallow etch technique that is very simple and relatively inexpensive to implement requiring no additional processing steps as the polarization compensator can be chemically etched at the same time as the shallow input ridge waveguides. The method of this device can conveniently be applied to a wide range of waveguide structures and material systems.

The device in accordance with the invention can be used to offset birefringence to various degrees and in some preferred instances can be designed to completely offset birefringence to completely compensate for differences between TE and TM modes.

## Brief Description of the Drawings

Exemplary embodiments of the invention, will now be described, in conjunction with the drawings, in which:

Fig. 1 is a prior art schematic diagram of an integrated waveguide diffraction grating device;

Fig. 2 is a graph of intensity versus wavelength for TE and TM polarized light shown to have their spectrums relatively shifted for the device of Fig. 1;

Fig. 3a is a wavelength demultiplexer similar to that of Fig.1 however having a polarization compensator in accordance with this invention is schematically shown;

Fig. 3b is a side view in cross section of a portion of the wavelength demultiplexer showing the slab waveguiding region including the polarization compensation region;

Fig. 4 is a graph of intensity versus wavelength for TE and TM polarized light shown to have their spectrums corresponding to one another, indicating no polarization sensitivity for the device of Fig. 3a;

Fig.5 is a graph of on chip loss (dB) versus wavelength depicting simulated channel response functions of the demultiplexers with different degrees of polarization compensation;

Fig. 6 is a graph of experimentally measured transmission versus wavelength spectrum which illustrates the channel response functions of the demultiplexer for different degrees of polarization compensation corresponding to different values of R;

Fig 7a is a graph of wavelength versus R which compares the calculated (solid line) and measured TE and TM wavelengths;

Fig 7b is a graph of wavelength split versus R which compares the calculated (solid line) and measured TE and TM wavelengths;

Fig. 8 is a side view in cross section of a portion of a wavelength demultiplexer similar to the one shown in Fig. 3b and also including electrodes in the form of a planar electrode and a ground plane, showing the slab waveguiding region including the polarization compensation region; and,

Fig. 9 is a top view of a phased array waveguide demultiplexer having two polarization compensation regions.

## Detailed Description

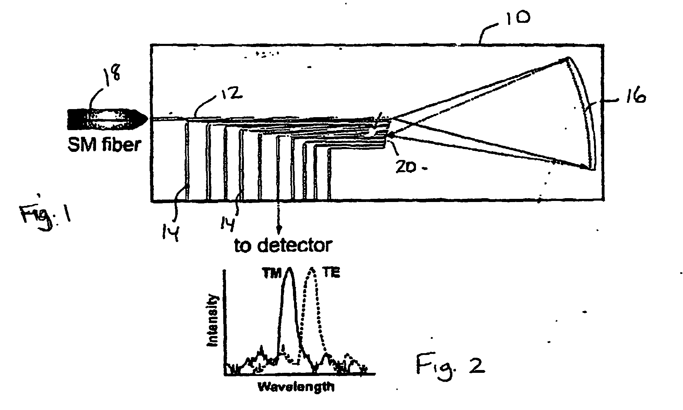

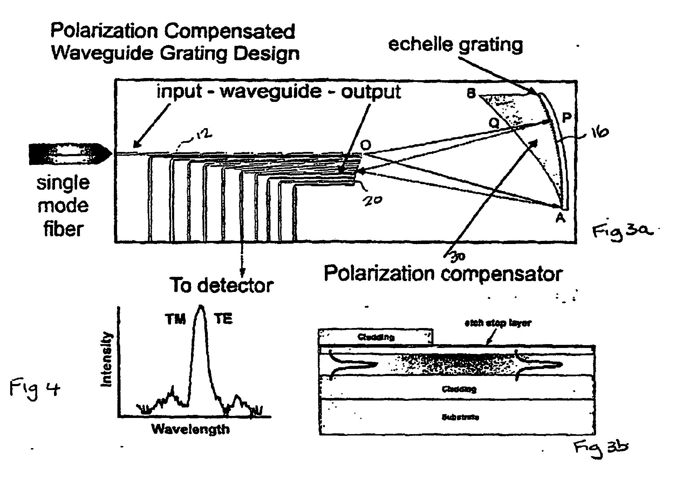

Referring now to prior art Fig. 1 the schematic of a typical wavelength demultiplexer 10 based on an integrated diffraction grating is shown. It consists of input/output waveguide arrays 12, 14 and an etched diffraction grating 16. The incoming optical signals of different wavelengths are coupled from an optical fiber 18 to an input end of the waveguide of the demultiplexer. At the end of the input waveguide, the light diverges into the slab waveguide and is then focused back to the inputs of the output waveguides by the curved echelle grating. Due to the dispersive property of the diffraction grating 16, light signals of different wavelengths are focused onto different output waveguides. For a given wavelength, the position of the focused spot, for example the location 20, depends on the effective index of the slab waveguide, in addition to geometrical parameters of the grating. Because the effective indices of the slab waveguide are different for TE and TM modes (and hence the slab exhibits birefringence), the focused spots do not overlap for the two polarizations, resulting in a polarization dependent wavelength shift in the channel response function, as shown in Fig. 2. Here the wavelengths of the TE and TM modes are shown to be relatively shifted. This polarization dependency produces intensity noise in the detected signal due to the polarization instability of the incoming optical signal from a fiber. It also increases the crosstalk between adjacent channels. In contrast, Fig 4 shows no shift between the TE and TM modes.

The birefringence or polarization dispersion is determined by the effective index difference $\Delta n$ of the slab waveguide for TE and TM modes. In an InGaAsP/InP heterostructure optimized for the least polarization sensitivity, such as the one described in the paper by He. et al. entitled "Monolithic integrated wavelength demultiplexer based on a waveguide Rowland circle grating in InGaAsP/InP", the wavelength shift between the two polarizations is typically around 0.4 nm

Usually two etching processes are required for the grating based wavelength demultiplexers: one shallow etching for defining single mode waveguides and one deep etching for the grating facets, turning mirrors, and multimode waveguides.

A wavelength demultiplexer with a polarization compensator 30 in accordance with this invention is schematically shown in Fig. 3a. The polarization compensator 30 consists of a shallow etched region close to the grating. Preferably, the region has a specific shape designed according to the criteria described below. The shallow etched area has a different effective index difference $\Delta n'$ between TE and TM modes. It covers the grating on one side and its boundary curve AB on the other side is determined by $\delta L_p = \Delta L_p/(\Delta n'/\Delta n - 1)$ where $\Delta L_p = \overline{OA} - \overline{OP}$ with the point O being the end of the input waveguide, A, the far end of the grating curve and P, any given point on the grating; $\delta L_p = \overline{PQ}$ is the distance from the point P to the compensator boundary measured along the line $\overline{OP}$.

Tests results have revealed that that such designed compensator can completely or at least substantially eliminate the polarization dependent wavelength shift of the demultiplexer. The physical principle governing the polarization compensator 30 can be understood as following. In a conventional demultiplexer such as the one in Fig. 1, the wavelength of the signal that is received by a given output waveguide must satisfy

$$\Delta\Phi \approx 4\pi m\Delta L_p\, /\, \lambda\ = 2mN\pi \tag{1}$$

where $\Delta\Phi$ is the phase difference between the light reflected by the grating facets at point A and point P, $\lambda$ the wave vector in the vacuum, n the effective index of the slab waveguide, $m$ the order of the grating and N the number of grating periods between A and P. This leads to the following relation between the channel response wavelengths for TE and TM modes:

$$\frac{n_{TE}}{\lambda_{TE}} = \frac{n_{TM}}{\lambda_{TM}} \tag{2a}$$

thus

$$\Delta\lambda = \lambda_{TE} - \lambda_{TM} = \frac{\Delta n}{n}\lambda \tag{2b}$$

where $\Delta n = n_{TE} - n_{TM}$ is the effective index difference of the slab waveguide for TE and TM modes.
After the inclusion of the compensator, the $\Delta\Phi$ condition can be written as

$$\Delta\Phi \approx 4\pi\big[n\Delta L_p - (n'-n)\delta L_p\big]/\,\lambda = 2mN\pi \tag{3}$$

where $n'$ is the effective index of the etched area. The relation between the channel wavelengths of TE and TM modes becomes

$$\frac{n_{TE}\Delta L_p - (n'_{TE}-n_{TE})\delta L_p}{\lambda_{TE}} = \frac{n_{TM}\Delta L_p - (n'_{TM}-n_{TM})\delta L_p}{\lambda_{TM}} \tag{4a}$$

thus

$$\Delta\lambda = \frac{\Delta n\ \Delta L_p - (\Delta n' - \Delta n)\delta L_p}{n\ \Delta L_p - (n'-n)\delta L_p}\lambda \tag{4b}$$

The condition for polarization insensitivity, i.e. $\Delta\lambda = 0$, can then be obtained by

$$\Delta n\Delta L_p - (\Delta n' - \Delta n)\delta L_p = 0 \tag{5}$$

that is

$$\delta L_p = \Delta L_p / \left( \Delta n' / \Delta n - 1 \right) \tag{6}$$

As an example, in a typical layer structure, the effective indices of the slab waveguide for TE and TM modes are $n_{TE}$ =3.18303, and $n_{TM}$ =3.18221 at 1.56$\mu$m. The index difference is therefore $\Delta n = 8.2 \times 10^{-4}$. After etching to the etch-stop layer of the waveguiding structure, the effective indices become $n_{TE}$ = 3.17585, and $n_{TM}$ = 3.17342. The index difference becomes $\Delta n'$ = 2.43 $\times$ 10$^{-3}$. The polarization compensation condition gives $\delta L_p / \Delta L_p$ = 0.513. For a grating 1$mm$ in height and operating at 55° incidence angle, the path length difference for the two ends of the grating is $\Delta L \approx$ 1.4$mm$. This leads to the topside length of the polarization compensator $\delta L \approx 0.72mm$.

Since the effective index change due to etching (or induced by other techniques) is very small, Eq. (4b) can be approximately rewritten as

$$\Delta \lambda \approx \frac{\Delta n \; \Delta L_p - (\Delta n' - \Delta n) \delta L_p}{n \; \Delta L_p} \lambda = \left( \frac{\Delta n}{n} - \frac{\Delta n' - \Delta n}{n} \cdot R \right) \lambda \tag{7}$$

where we have defined the parameter $R = \dfrac{\delta L_p}{\Delta L_p}$. Therefore, we can also control the TE-TM wavelength split to any degree by adjusting the R value.

The wavelength shift after the introduction of the polarization compensator can be derived by equating Eq. (1) and (3), that is

$$\frac{n \Delta L_p}{\lambda} = \frac{n \Delta L_p - (n' - n) \delta L_p}{\lambda'}$$

where $\lambda$ and $\lambda'$ are the charmel response wavelengths before and after the introduction of the polarization compensator. From this equation, we can obtain

$$\lambda' = \lambda \left( 1 + \frac{n - n'}{n} \cdot R \right) \tag{8}$$

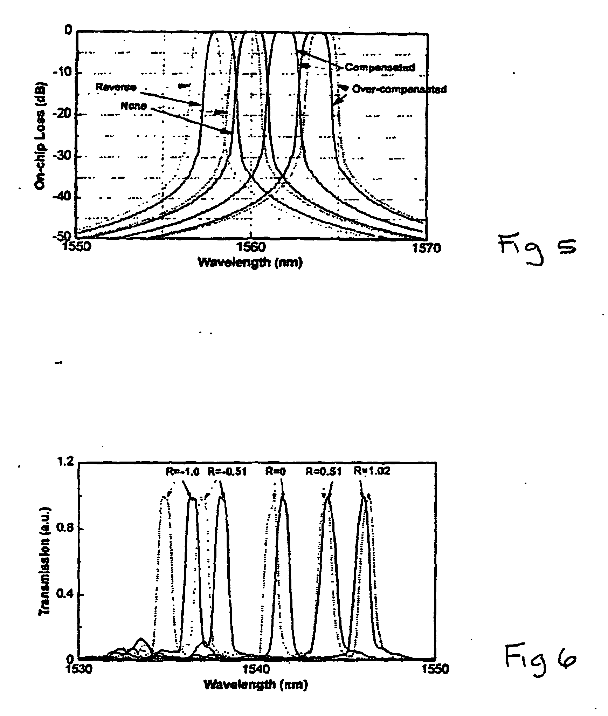

Fig. 5 shows the channel response functions of the demultiplexer simulated using Kirchhoff-Huygens diffraction integral formula, for different degrees of polarization compensation corresponding to R=0 (no compensation), R=0.51 (substantially compensated), R=1.02 (over-compensated), and R=-0.51 (reverse compensated). It can be seen that when there is no compensation the channel wavelength for TM mode is about 0.4 nm shouter that that of TE mode. As the R value increases, the channel response functions for both TE and TM modes shift to longer wavelengths. The amount of shift is larger for the TM mode than for the TE mode. The response functions for TE and TM modes substantially overlap at the polarization compensation condition, R=0.51.

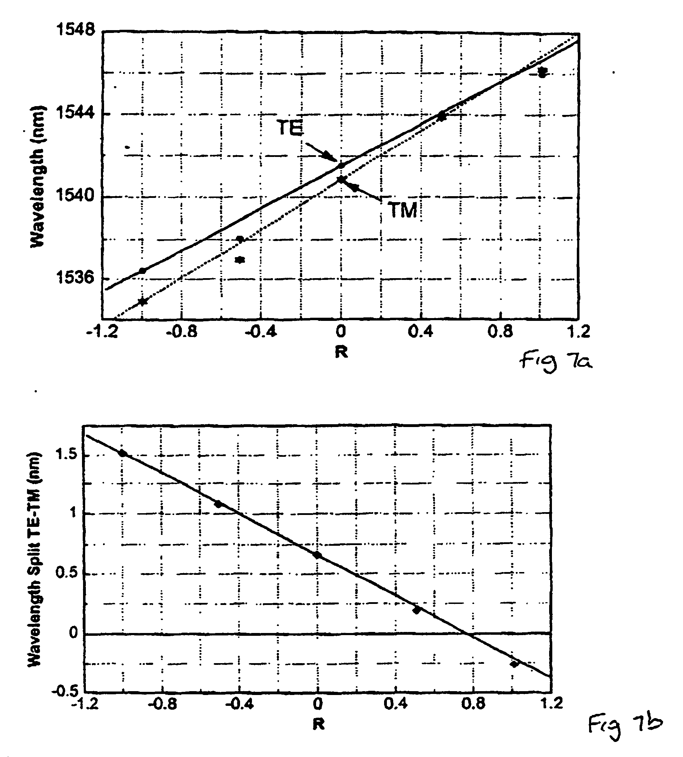

Initial experimental results, presented in Figs. 6 and 7, verify the above modeling. Fig. 6 presents the measured TE and TM spectra from five demultiplexer chips with different degrees pf polarization compensation. Due to an error in the etching and a slight variation in the waveguide structure which modified the initial TE-TM splitting, complete compensation was not achieved. However, the polarization splitting was induced from 0.66 nm to 0.20 nm, and changed sign to -0.26 nm in the over-compensated version, R=1.02. The splitting became larger for the reverse-compensated versions (R=-0.51 and -1.00), exactly as predicted by simulation.

Fig, 7a compares the calculated and measured TE and TM wavelengths as well as the wavelength split (Fig. 7b) as a function of the R-value. Excellent agreement has been obtained, especially for the wavelength splitting. The slight deviation between theory and experiments on the wavelength position of the peak in some chips is due to the non-uniformity of the wafer and possibly some slight errors in writing the gratings.

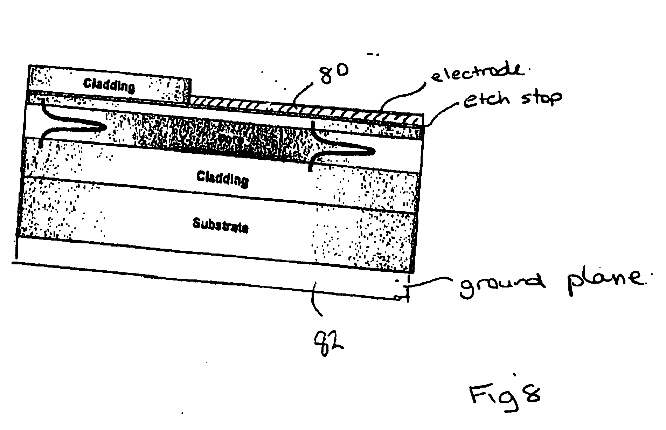

It should be noted that, although modeling and experiments were related to semiconductor waveguide structures and etching was the selected technique for achieving the required effective refractive index difference, the polarization compensator in accordance with this invention can be applied to other material systems such as glass, plastic, and SiO$_2$/Si waveguides. Techniques other than etching for achieving an index difference can also be used, such as ion implantation and diffusion. By using an electrode of the shape of the compensator or alternatively a portion of the compensator, an adjustable polarization compensator can also be realized by using current injection, applying a suitable voltage across the region, electro-optic effect, thermo-optical effect, or any other mechanism capable of modifying the effective index of the waveguide. Hence a compensation region can be formed having a fixed birefringence difference from the principal slab waveguide and electrodes may conveniently be provided to obtain a controllable refractive index change in combination with the fixed birefringence. Alternatively the index of some materials may be changed sufficiently by optical effects, by irradiating the compensator region with a suitable wavelength and intensity of light. Referring now to Fig. 8, a schematic view shows a structure wherein planar electrodes in the form of an upper electrode 80 and a around plane 82 below a substrate layer provide means of, for example, injecting current into the device or providing a controllable electric field sufficient for changing the refractive index of the waveguide therebetween. Although not shown in this figure, two or more polarization offsetting/compensating regions may be provided having similar electrodes. For example a first electrode and its ground plane can be used for changing the refractive index sufficiently to provide a switching function such that a particular wavelength of light to be demultiplexed is directed to one of a plurality of waveguides in a first non-switched mode, and to one of a plurality of different waveguides in a second switched mode. Of course since the refractive index can be dynamically changed, the wavelength can be switched between a plurality of waveguides dependent upon the applied switching stimulus across the offsetting/compensation region, in this instance serving as a switching region. In addition, a second offsetting/compensating region can be provided to correct for unwanted polarization splitting in the form of unwanted wavelength shifts between TE and TM modes. The provision of two such offsetting/compensation regions is practicable for both reflective gratings and transmissive gratings as will hereafter be described.

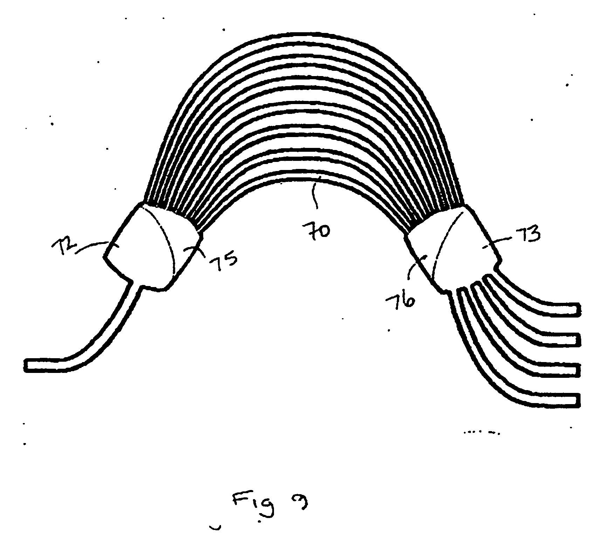

The term offset used in this specification shall mean changing the birefringence of a region so as to control the amount of polarization sensitivity exhibited by the device. The provision of a compensation region within a slab waveguide to offset or compensate for polarization effects or differences between TE and TM modes, can also be used for devices based on transmissive diffraction gratings such as phased array waveguide gratings, or ruled gratings having a planar slab waveguiding region. In these instances, the polarization compensation region can be disposed either between the input port and the grating element, or between the grating element and the output region or both, as shown in Fig. 9. In the case of the phased array, in particular, this method has the advantage of a simpler fabrication process compared to prior art devices such as the one shown in U. S. patent 5,623,571 mentioned above, as the instant invention only requires a single etching or regrowth step.

Turning now to Fig. 9, planar slab waveguide regions 72 and 73 are shown having an array of waveguides 70 of different lengths disposed therebetween. In this embodiment, triangular-like polarization compensation regions 75 and 76 are provided. These regions may conveniently be etched or other means may be used aside from etching or in combination with etching to alter the effective index of the regions 72 and/or 73. Instead of etching down to an etch stop layer, or in addition to etching to provide a compensation region having a fixed different birefringence, one or both of these regions may have the slab waveguide compensation region between an electrode layer and a ground plane, thereby providing a device that to some degree can be dynamically controlled, similar to what is shown in Fig. 8 for the diffraction grating. As well, the region 75 or another region within the slab waveguide region 72 can have a planar electrode and ground plane to provide means of optically switching particular wavelengths between various output waveguides, wherein another region within 72 or 73 can be provided with an planar electrode and ground plane to control and offset dynamically changing polarization effects that result from switching.

This invention provides a convenient method of compensating the polarization dispersion in grating based wavelength demultiplexers by incorporating a specially shaped area with modified index. Its implementation in the fabrication process of the device using a standard shallow etch technique is very simple and relatively inexpensive to implement. In fact, it does not require any additional processing steps since the polarization compensator can be chemically etched at the same time as the shallow input ridge waveguides. The etching depth can be well controlled by using an etch-stop layer. It can be applied to a wide range of waveguide structures and material systems. The method and device of this invention can lower the requirement on the birefringence of the slab waveguide so that the structure can be designed to better suit other performance considerations of the device. It is therefore believed to be preferable to all other methods reported in the literature for polarization compensation.

Of course numerous other embodiments may be envisaged. For example, this technique can also be used to control the polarization sensitivity to any degree, thus making devices useful for polarization monitoring and other applications requiring control of the polarization state.

**Claims**

1. A method of compensating for birefringence normally associated with the propagation of light in a planar waveguide grating device having a slab waveguiding region having a first birefringence, comprising the steps of:

   providing within the slab waveguiding region a second region [30] having a predetermined shape and predetermined dimensions, the second region [30] having a second different birefringence than the first birefringence for providing polarization compensation of the device.

2. A method of compensating for birefringence as defined in claim 1, wherein the second region [30] is provided by etching a portion of the first region to a predetermined thickness.

3. A method of compensating for birefringence as defined in claim 1, wherein the second region [30] is provided by one of doping or implanting ions into a portion of the slab waveguiding region having a first birefringence in a controlled manner.

4. A method as defined in claim 1, wherein the step of providing the second region [30] comprises providing planar electrodes [80, 82] on opposite sides of the second region [30], said planar electrodes [80, 82] for providing at least one of a current, voltage, an electro-optic signal, and thermo-optic signal to at least partially effect said second different birefringence.

5. An integrated at least substantially polarization compensated optical waveguide grating device comprising:

   an input region having an input port,
   an output region having at least a plurality of predetermined light receiving locations for receiving light from the input region,
   an input slab waveguide region and an output slab waveguide region each having a predetermined birefringence, said input slab waveguide region being optically coupled with the input region for partially confining a beam of light launched from the input region between two parallel planes, said output slab waveguide region being optically coupled with the output region for partially confining a beam of light launched from the input region between two parallel planes,
   a grating [16] disposed between the input slab waveguide region and the output slab waveguide region to receive a beam of light launched from the input port through the input slab waveguide region and to separate the beam into sub-beams of light of different wavelengths to the plurality of predetermined light receiving locations through the output slab waveguide region,
   a compensating slab waveguide region [30] between the input port and the output region having a predetermined shape and predetermined dimensions and having a different birefringence than the predetermined birefringence of at least one of the input and output slab waveguide regions for providing polarization compensation of the device.

6. An integrated at least substantially polarization compensated optical waveguide grating device as defined in claim 5, wherein the dimension and birefringence of the compensating slab waveguide region [30] are selected so as to provide a same optical path length that TM polarized light traverses and TE polarized light traverses propagating from the input port to at least one of the plurality of output locations.

7. An integrated at least substantially polarization compensated optical waveguide grating device as defined in claim 5, wherein the grating [16] is a phased waveguide arrayed grating comprising an array of waveguides disposed between the input slab waveguide region and the output slab waveguide region.

8. An integrated at least substantially polarization compensated optical waveguide grating device as defined in claim 7, wherein the compensating slab waveguide region [30] is disposed between at least one of the input region and the phased array waveguide grating and the output region and the phased array waveguide region.

9. An integrated at least substantially polarization compensated optical waveguide grating device as defined in claim 7, comprising planar electrodes [80, 82] disposed on opposing sides of at least a portion of the compensating slab waveguide region [30].

10. An integrated at least substantially polarization compensated optical waveguide grating device as defined in claim 9, wherein the electrodes [80, 82] are for providing an electrical, optical, or thermal effect to vary the birefringence of the compensating slab waveguide region.

**11.** A device as defined in claim 5, wherein the grating [16] is a phased array grating comprising an array of waveguides having different optical path lengths.

**12.** A device as defined in claim 5, wherein the device is comprised of a dielectric material.

**Patentansprüche**

**1.** Ein Verfahren zur Kompensation der Doppelbrechung, welche üblicherweise in Verbindung mit der Ausbreitung von Licht in einer mit einem Gitter versehen Vorrichtung mit einem flachen Wellenleiter steht, welche einen Schichtwellenleiterbereich mit einer ersten Doppelbrechung aufweist, und welches Verfahren die Schritte aufweist:

vorsehen eines zweiten Bereichs (30) innerhalb des Schichtwellenleiterbereiches, welcher eine vorbestimmte Form und vorbestimmte Abmessungen aufweist, wobei dieser zweite Bereich (30) eine zweite unterschiedliche Doppelbrechung zur ersten Doppelbrechung aufweist, um **dadurch** eine Polarisationskompensation der Vorrichtung zu erreichen.

**2.** Ein Verfahren zur Kompensation der Doppelbrechung gemäss Anspruch 1 definiert, wobei der zweite Bereich (30) vorgesehen wird, indem ein Teil des ersten Bereiches bis zu einer vorbestimmten Dicke geätzt wird.

**3.** Ein Verfahren zur Kompensation der Doppelbrechung gemäss Anspruch 1, wobei der zweite Bereich (30) vorgesehen wird, indem Ionen auf kontrollierte Art und Weise in einen Teil des Schichtwellenleiterbereiches dotiert oder implantiert werden, welcher Teil eine erste Doppelbrechung aufweist.

**4.** Ein Verfahren gemäss Anspruch 1, wobei der Schritt des Vorsehens des zweiten Bereiches (30) das Bereitstellen von flachen Elektroden (80, 82) an gegenüberliegenden Seiten des zweiten Bereiches vorsieht, wobei diese flachen Elektroden (80, 82) mindestens einen Strom, eine Spannung, ein elektrooptisches Signal und/oder ein thermooptisches Signal verfügbar machen, um **dadurch** diese zweite unterschiedliche Doppelbrechung mindestens teilweise zu beeinflussen.

**5.** Eine integrierte und mindestens wesentlich polarisationskompensierte optische Wellenleitervorrichtung mit einem Gitter, aufweisend:

einen Eintrittsbereich mit einer Eintrittsöffnung,
einen Austrittsbereich, welcher mindestens einer Vielzahl von vorbestimmten Licht-empfangsstellen für den Empfang von Licht vom Eintrittsbereich aufweist,
einen Eintritts-Schichtwellenleiterbereich sowie einen Austritts-Schichtwellenleiterbereich, wobei jeder von diesen eine vorbestimmte Doppelbrechung aufweist, wobei der Eintritts-Schichtwellenleiterbereich optisch mit dem Eintrittsbereich gekoppelt ist, um **dadurch** einen vom Eintrittsbereich ausgehenden Lichtstrahl teilweise zwischen zwei parallelen Ebenen einzuschränken, wobei der Austritts-Schichtwellenleiterbereich optisch mit dem Austrittsbereich gekoppelt ist, um **dadurch** einen vom Eintrittsbereich ausgehenden Lichtstrahl teilweise zwischen zwei parallelen Ebenen einzuschränken,
ein Gitter (16), welches zwischen dem Eintritts-Schichtwellenleiterbereich und dem Austritts-Schichtwellenleiterbereich angeordnet ist, um einen von der mindestens einen Eintrittsöffnung durch den Eintritts-Schichtwellenleiterbereich ausgehenden Lichtstrahl zu empfangen und um den Strahl in Unterstrahlen von Licht mit unterschiedlichen Wellenlängen zu der Vielzahl von vorbestimmten Lichtempfangsstellen durch den Austritts-Schichtwellenleiterbereich aufzuteilen,
einen kompensierenden Schichtwellenleiterbereich (30) zwischen der Eintrittsöffnung und dem Austrittsbereich, welcher eine vorbestimmte Form sowie vorbestimmte Abmessungen und eine andere Doppelbrechung als die vorbestimmte Doppelbrechung von mindestens der Eintritts- oder der Austritts-Schichtwellenleiterbereichen aufweist, um **dadurch** die Polarisationskompensation der Vorrichtung vorzusehen.

**6.** Eine integrierte und mindestens wesentlich polarisationskompensierte optische Wellenleitervorrichtung mit einem Gitter gemäss Anspruch 5, wobei die Abmessung und die Doppelbrechung des kompensierenden Schichtwellenleiterbereiches (30) so gewählt werden, dass diese die gleiche optische Pfadlänge liefern, welche TM polarisiertes Licht durchläuft und TE polarisiertes bei der Ausbreitung von der Eintrittsöffnung zu mindestens einem der Vielzahl von Austrittsstellen durchläuft.

7. Eine integrierte und mindestens wesentlich polarisationskompensierte optische Wellenleitervorrichtung mit einem Gitter gemäss Anspruch 5, wobei das Gitter (16) eine phasengesteuerte Anordnung einer Wellenleiter-Gittervorrichtung ist, welche eine Anordnung von Wellenleitern aufweist, die zwischen dem Eintritts-Schichtwellenleiterbereich und dem Austritts-Schichtwellenleiterbereich angeordnet ist.

8. Eine integrierte und mindestens wesentlich polarisationskompensierte optische Wellenleitervorrichtung mit einem Gitter gemäss Anspruch 7, wobei der kompensierende Schichtwellenleiterbereich (30) zwischen mindestens einem Eintrittsbereich und der phasengesteuerten Wellenleiteranordnung mit Gitter, und/oder dem Austrittsbereich oder der phasengesteuerten Wellenleiteranordnung mit Gitter angeordnet ist.

9. Eine integrierte und mindestens wesentlich polarisationskompensierte optische Wellenleitervorrichtung mit einem Gitter gemäss Anspruch 7, welche flache Elektroden (80, 82) aufweist, die an gegenüberliegenden Seiten von mindestens einem Teil des kompensierenden Schichtwellenleiterbereiches (39) angeordnet sind.

10. Eine integrierte und mindestens wesentlich polarisationskompensierte optische Wellenleitervorrichtung mit einem Gitter gemäss Anspruch 9, wobei die Elektroden (80, 82) dazu dienen, eine elektrische, optische oder thermische Wirkung zu erzielen, um **dadurch** die Doppelbrechung des kompensierenden Schichtwellenleiterbereiches zu variieren.

11. Eine Vorrichtung gemäss Anspruch 5, wobei das Gitter (16) eine phasengesteuerte Gitteranordnung ist, aufweisend eine Anordnung von Wellenleitern mit unterschiedlichen optischen Pfadlängen.

12. Eine Vorrichtung gemäss Anspruch 5, wobei die Vorrichtung ein dielektrisches Material beinhaltet.

## Revendications

1. Procédé de compensation de la biréfringence normalement associée à la propagation de la lumière dans un dispositif à grille de guide d'onde plan qui présente une zone de guide d'onde en plaque avec une première biréfringence, lequel procédé comprend les étapes qui consistent à prévoir dans la zone de guide d'onde de la plaque une deuxième région [30] de forme et de dimensions prédéterminées, la deuxième région [30] ayant une deuxième biréfringence différente de la première biréfringence de manière à assurer la compensation de la polarisation par le dispositif.

2. Procédé de compensation de la biréfringence selon la revendication 1, dans lequel la deuxième région [30] est obtenue en gravant une partie de la première région sur une épaisseur prédéterminée.

3. Procédé de compensation de la biréfringence selon la revendication 1, dans lequel la deuxième région [30] est formée par dopage ou implantation contrôlée d'ions dans une partie de la région de guide d'onde en plaque qui présente une première biréfringence.

4. Procédé selon la revendication 1, dans lequel l'étape de formation de la deuxième région [30] comprend la formation d'électrodes planes [80, 82] sur le côté opposé de la deuxième région [30], lesdites électrodes planes [80, 82] étant prévues pour délivrer un courant, une tension, un signal électro-optique et/ou un signal thermo-optique qui agissent au moins en partie sur ladite deuxième biréfringence différente.

5. Dispositif intégré à grille de guide d'onde optique dont la polarisation est au moins essentiellement compensée, qui comprend :

   - une région d'entrée dotée au moins d'un orifice d'entrée,
   - une région de sortie qui présente au moins plusieurs emplacements prédéterminés de réception de lumière qui reçoivent la lumière de la région d'entrée,
   - une région de guide d'onde en plaque d'entrée et une région de guide d'onde en plaque de sortie, chaque région présentant une biréfringence prédéterminée, ladite région de guide d'onde en plaque d'entrée étant couplée optiquement à la région d'entrée de manière à confiner partiellement entre deux plans parallèles un faisceau de lumière émis par la région d'entrée, ladite région de guide d'onde en plaque de sortie étant couplée optiquement à la région de sortie pour confiner partiellement entre deux plans parallèles un faisceau de lumière émis par la région d'entrée,

- une grille [16] disposée entre la région de guide d'onde en plaque d'entrée et la région de guide d'onde en plaque de sortie pour recevoir un faisceau de lumière émis par l'orifice d'entrée par l'intermédiaire de la région de guide d'onde en plaque d'entrée et pour séparer le faisceau en sous-faisceaux de lumière de différentes longueurs d'onde vers les différents emplacements prédéterminés de réception de lumière par l'intermédiaire de la région de guide d'onde en plaque de sortie,

- une région [30] de guide d'onde en plaque de compensation entre l'orifice d'entrée et la région de sortie, qui présente une forme et des dimensions prédéterminées et dont la biréfringence est différente de la biréfringence prédéterminée de la région de guide d'onde en plaque d'entrée et/ou de la région de guide de d'onde en plaque de sortie, pour assurer la compensation de la polarisation par le dispositif.

6. Dispositif intégré à grille de guide d'onde optique dont la polarisation est au moins essentiellement compensée selon la revendication 5, dans lequel les dimensions et la biréfringence de la région [30] de guide d'onde en plaque de compensation sont sélectionnées de manière à fournir une même longueur de parcours optique que la lumière polarisée TM traverse et que la lumière polarisée TE traverse en se propageant depuis l'orifice d'entrée jusqu'au moins un des différents emplacements de sortie.

7. Dispositif intégré à grille de guide d'onde optique dont la polarisation est au moins essentiellement compensée selon la revendication 5, dans lequel la grille [16] est une grille en réseau de guides d'onde en phase qui comprend un réseau de guides d'onde disposés entre la région de guide d'onde en plaque d'entrée et la région de guide d'onde en plaque de sortie.

8. Dispositif intégré à grille de guide d'onde optique dont la polarisation est au moins essentiellement compensée selon la revendication 7, dans lequel la région [30] de guide d'onde en plaque de compensation est disposée entre au moins la région d'entrée et la grille de guide d'onde en réseau phasé et/ou la région de sortie et la région de guide d'onde en réseau phasé.

9. Dispositif intégré à grille de guide d'onde optique dont la polarisation est au moins essentiellement compensée selon la revendication 7, qui comprend des électrodes planes [80, 82] disposées sur des côtés opposés d'au moins une partie de la région [30] de guide d'onde en plaque de compensation.

10. Dispositif intégré à grille de guide d'onde optique dont la polarisation est au moins essentiellement compensée selon la revendication 9, dans lequel les électrodes [80, 82] sont prévues pour exercer un effet électrique, optique ou thermique qui modifie la biréfringence de la région de guide d'onde en plaque de compensation.

11. Dispositif selon la revendication 5, dans lequel la grille [16] est une grille en réseau phasé qui comprend un réseau de guides d'onde dont les parcours optiques ont différentes longueurs.

12. Dispositif selon la revendication 5, dans lequel le dispositif est constitué d'un matériau diélectrique.

Fig. 1

SM fiber

to detector

Fig. 2

Polarization Compensated
Waveguide Grating Design

echelle grating

input - waveguide - output

single
mode
fiber

Fig 3a

To detector

Polarization compensator

Fig 4

Intensity

TM   TE

Wavelength

Cladding

etch step layer

Cladding

Substrate

Fig 3b

Fig 5

Fig 6

Fig 7a

Fig 7b

Fig 8

Fig 9

## REFERENCES CITED IN THE DESCRIPTION

### Patent documents cited in the description

- US 5623571 A, P. C. Chou, C. H. Joynerm M. Zirngibl

### Non-patent literature cited in the description

- **H. TAKAHASHI ; Y. HIBINO ; I. NISHI.** Polarization-insensitive arrayed waveguide grating wavelength multiplexer on silicon. *Opt. Lett.,* 1992, vol. 17 (7), 499-501
- **J. B. D. SOOLE ; M. R. AMERSFOORT ; H. P. LEBLANC ; N. C. ANDREADAKIS ; A. RAIJHEL ; C. CANEAU ; M. A. KOZA ; R. BHAT ; C. YOUTSEY ; I. ADESIDA.** Polarization-independent InP arrayed waveguide filter using square cross-section waveguides. *Electron. Lett.,* 1996, vol. 32, 323-324
- Polarization compensated waveguide grating router on InP. *Electron. Lett.,* 1995, vol. 31, 1662-1664
- **C. G. M. VREEBURG ; C. G. P. HERBEN ; X. J. M LEIJTENS ; M K SMIT ; F. H. GROEN ; J. J. G. M. VAN DER TOL ; P. DEMEESTER.** An improved technology for eliminating polarization dispersion in integrated phasar demultiplexers. *Proc. 23rd Conf. on Optical Comm. (ECOC'97,* 1997, 3.83-3.86
- **M ZIRNGIBL ; C. H. JOYNER ; L. W. STULZ ; TH. CRAIGGE ; C. DRAGONE.** Polarization independent 8x8 waveguide grating multiplexer on InP. *Electron. Lett.,* 1993, vol. 29, 201-201

- **L. H. SPIEKMAN ; M R AMERSFOORT ; A. H. DE VREEDE ; F. P. G. M. VAN HAM ; A. KUNTZE ; J. W. PEDERSEN ; P. DEMEESTER ; M. K. SMIT.** Design and realization of polarization independent phased array wavelength demultiplexers using different array order for TE and TM. *J. Lightwave Technol.,* 1996, vol. 14, 991-995
- **H. BISSESSUR ; F. GABORIT ; B. MARTIN ; P. PAGNOD-ROSSIAUX ; J. L. PEYRE ; M. RENAUD.** 16 channel phased array wavelength demultiplexer on InP with low polarization sensitivity. *Electron. Lett.,* 1994, vol. 30, 336-337
- **J.-J. HE ; B. LAMONTAGNE ; A DELAGE ; L. ERICKSON ; M. DAVIES ; E. S. KOTELES.** Monolithic integrated wavelength demultiplexer based on a waveguide Rowland circle grating in InGaAsP/InP. *J. Lightwave Tech,* vol. 16, 631-638
- **E. GINI ; W. HUNZIKER ; H. MELCHIOR.** Polarization independent WDM multiplexer/demultiplexer module. *J. Lightwave Tech,* 1998, vol. 16, 625-630